# EUROPEAN PATENT APPLICATION

(11) **EP 1 495 841 A1**
(43) Date of publication of application: **12.01.2005**
(21) Application number: 03712703.2
(22) Date of filing: 14.03.2003
(51) Int. Cl.: B24C 5/06

(54) **SURFACE TREATMENT FACILITY OF METAL PLATE, METHOD FOR PRODUCING METAL PLATE AND SYSTEM FOR PRODUCING METAL PLATE**

(30) Priority: 16.04.2002 JP 2002113502
(71) Applicant: JFE Steel Corporation, Tokyo, 100-0011 (JP)
(72) Inventor: KIMURA, Yukio c/o Intellectual Property Department, Chiyoda-ku, Tokyo 100-0011 (JP); UENO, Masayasu c/o Intellectual Property Depart., Chiyoda-ku, Tokyo 100-0011 (JP); SODANI, Yasuhiro c/o Intellectual Property Depart., Chiyoda-ku, Tokyo 100-0011 (JP)
(74) Representative: Grünecker, Kinkeldey, Stockmair & Schwanhäusser
(86) International application number: PCT/JP2003/003048
(87) International publication number: WO 2003/086708

(57) **Abstract**

A surface treatment apparatus for metallic sheet has at least one centrifugal blasting machine to blast solid particles having 30 to 300 µm of mean particle diameter against the continuously traveling metallic sheet. The blasting machine is structured by a centrifugal rotor having a rotation axis. The line of intersection between the plane vertical to the rotation axis and the plane of the metallic sheet is positioned in parallel to or at 45° or smaller angle to the travel direction of the metallic sheet.

## Description

### FIELD OF THE INVENTION

The present invention relates to an apparatus for surface treatment on producing a metallic sheet such as galvanized steel sheet having excellent press formability and image sharpness after coating by creating a surface roughness configured by dense microscopic irregularities on the surface thereof by blasting fine solid particles against the surface of the metallic sheet, and relates to a method for producing metallic sheet as an application of the apparatus, and specifically relates to an apparatus for surface treatment being able to efficiently create a surface roughness even under a high line speed, further to an apparatus for surface treatment being able to provide a compact design therefor, a method for producing metallic sheet using the apparatus, a hot-dip coating line of metallic sheet using the apparatus, and a continuous annealing line of metallic sheet using the apparatus.

### DESCRIPTION OF THE PRIOR ARTS

Thin steel sheets such as those of galvanized steel sheets and cold-rolled steel sheets used for press-forming are requested to have an adequately adjusted surface roughness. This is because the necessity of increase in oil-retaining property between the die and the steel sheet during press-forming, thus to prevent troubles of die-galling, break of steel sheet, or the like by creating a specific surface roughness on the steel sheet. For example, increased sliding resistance between the steel sheet and the die likely induces break of steel sheet on the punching face thereof or near the bead sections thereof.

A general practice of adjusting the surface roughness of steel sheet is to create a specific microscopic irregularity on the surface of mill roll to transfer the irregular pattern onto the surface of steel sheet in the temper rolling stage. The method to transfer the surface roughness of the roll in temper rolling stage, however, raises problems of failing in creating fine irregularity and of varying the surface roughness on the steel sheet resulted from the change of the roughness on roll with time caused by wear of roll or the like.

As a different means from the means using temper rolling according to the prior art, the inventors of the present invention derived a method for adjusting the surface roughness of galvanized steel sheet and the like by blasting fine solid particles directly onto the surface thereof. According to the derived method, collisions of spherical solid particles against the surface of steel sheet form large number of microscopic concavities to create microscopic irregularities in what is called the "dimple shape". That kind of surface morphology gives superior effect of increasing the oil-retaining property between the steel sheet and the die particularly during press-forming stage, which significantly improves the press-formability. Furthermore, smaller size of solid particles being blasted creates denser irregularities of small pitch pattern on the surface of steel sheet, thus the image sharpness after coating is improved, and the prepared steel sheet is suitable for external plates of automobiles and the like.

Typical methods for blasting solid particles are centrifugal blasting machine and air blasting machine. The air blasting machine accelerates compressed air at an ej ection nozzle, and accelerates the solid particles utilizing the drag of the compressed air. In particular, the air blasting machine is suitable for blasting fine solid particles having small mass thereof, and has a feature of extremely increasing the speed of solid particles. On the other hand, the centrifugal blasting machine blasts solid particles using the centrifugal force of rotating vane. Since the centrifugal blasting machine is able to blast large quantity of solid particles compared with the air blasting machine, the centrifugal blasting machine is more suitable blasting means to treat steel sheet with large width traveling at a high speed in the producing line for iron and steel sheets such as galvanized steel sheet and cold-rolled steel sheet.

A method for treating steel sheets using that type of centrifugal blasting machine is disclosed in Japanese Patent Laid-Open No. 63-166953, as a blast treatment method aiming to prevent crack generation on hot-dip galvanized steel sheet during forming work. The disclosed method is to treat a steel sheet using a centrifugal blasting machine under a condition that metallic powder having 80 to 180 µm of particle size is blasted at 30 m/s or higher particle speed. The disclosure, however, does not give the location of the centrifugal blasting machine to treat the wide width steel sheet which travels at a high speed.

On the other hand, the blast treatment using centrifugal blasting machine is widely used to conduct descaling treatment for hot-strip of stainless steel. According to the method, to blast the particles over a wide range on the steel sheet, centrifugal blasting machines are arranged so as the line of intersection between the plane vertical to the rotation axis of the centrifugal rotor and the plane of the steel sheet to become an angle near-vertical to the direction of travel of the steel sheet.

The distance between the center of rotation of the rotor of centrifugal blasting machine and the metallic strip, (hereinafter referred to as the "blast distance"), is generally set to about 1 to 1.5 meter. For a metallic strip having about 1500 mm in width, generally about two to four units of centrifugal blasting machines are arranged for each face thereof. In that case, if the particle size is small, the blasted particles are decelerated in air, and the kinetic energy thereof is decreased at the moment of colliding thereof against the metallic strip. Therefore, particles having about 0.5 to 2 mm are applied because particles smaller than those sizes fail to obtain desired descaling effect.

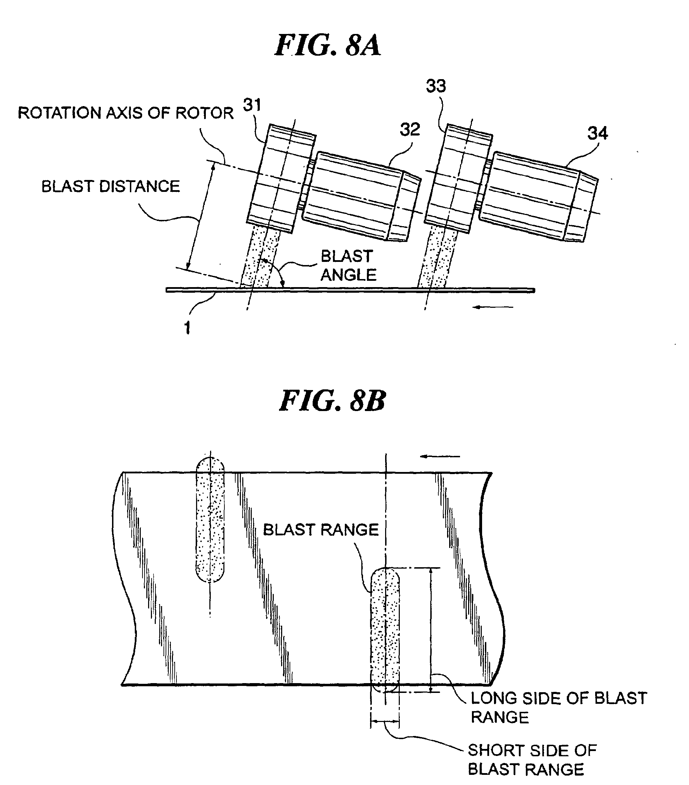

Fig. 8 shows a typical arrangement of centrifugal blasting machines mainly aiming at descaling according to the prior art. Fig. 8 is a embodiment of arranging two units of centrifugal blasting machines on one side of the steel sheet 1. Centrifugal rotor sections 31 and 33 are driven to rotate by motors 32 and 34, respectively. At this moment, the solid particles are blasted from the centrifugal rotor sections 31 and 33 against the steel sheet 1. Generally the centrifugal rotor sections 31 and 33 have a specific inclination to the surface of the steel sheet 1, (hereinafter referred to as the "blast angle").

Since once-blasted solid particles collide against the steel sheet while generating a certain spread thereof along the rotational direction of the centrifugal rotor sections 31 and 33, the zone to which the solid particles collide against the surface of steel sheet, (hereinafter referred to as the "blast range"), has a spread along the rotational direction of the rotor sections.

In this case, a general practice for arranging the centrifugal blasting machines according to the prior art is that the centrifugal blasting machines are arranged so as the direction having a spread of blast range, (hereinafter referred to as the "longer side direction of blast range"), to become vertical or to have a small angle to the direction of travel of the steel sheet. This is because the arrangement matching the long side direction of the blast range with the sheet width direction enlarges the range of treatment by a single centrifugal blasting machine. When more than one centrifugal blasting machine are arranged along the width of the steel sheet, generally the blasting machines are located in row in the direction of travel of the steel sheet at a certain distance therebetween, which is shown in Fig. 8.

For creating a surface roughness on the steel sheet by blasting fine solid particles in an iron and steel making line, it is necessary to apply plurality of centrifugal blasting machines to blast large quantity of solid particles to treat wide width steel sheet. In that case, generally the number or the quantity of solid particles colliding against the unit area of the surface of steel sheet, (hereinafter referred to as the "blast density"), is adjusted to a constant level to control the morphology of microscopic irregularity created on the surface of steel sheet to a specified embodiment. Since, in this case, the increased line speed decreases the time that the steel sheet passes through the blast range, the quantity of solid particles blasted has to be changed proportional to the line speed. As a result, the line which treats steel sheets traveling at a high speed needs to apply centrifugal blasting machine which has a capacity of blasting large quantity of solid particles.

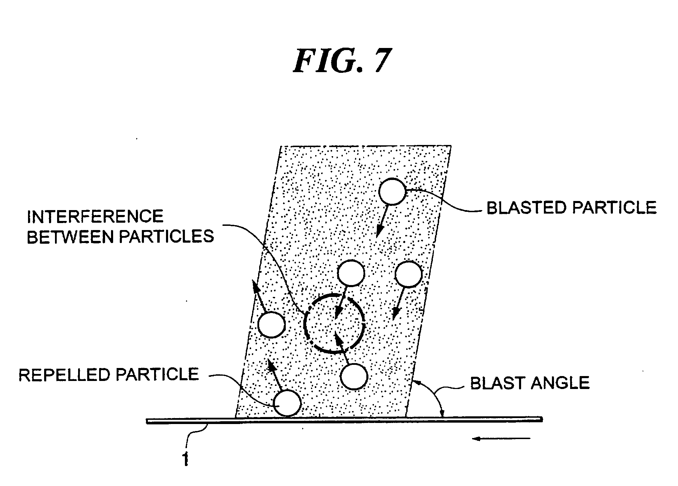

Increased quantity of solid particles blasted to a specific blast range, however, raises a problem of likely inducing interference between solid particles. That is, increase in the quantity of solid particles blasted in a unit time from a single centrifugal blasting machine decreases the distance between particles in a space between the blasting position and the colliding position on the surface of steel sheet, which increases the total weight of solid particles existing per unit volume during blasting, (hereinafter referred to as the "particle density of solid particles"). In this state, as shown in Fig. 7 as a schematic drawing, the solid particles traveling from the centrifugal blasting machine toward the surface of the steel sheet, (hereinafter referred to as the "blasted particles"), become easily collide with the solid particles which collided against the surface of steel sheet to create dents thereon, then scattered therefrom, (hereinafter referred to as the "repelled particles").

When the blasted particles collide with other blasted particles or repelled particles, before colliding against the surface of steel sheet, the kinetic energy of the blasted particles is lost, or the blasted particles are scattered to fail in colliding against the specified blast range. As a result, the number of solid particles colliding against the surface of steel sheet reduces, or the speed of collision speed of the solid particles decreases to fail in forming sufficient number of dents on the surface of steel sheet, which fails to create desired surface roughness.

The phenomenon expresses that, even when the quantity of blasting solid particles is increased proportionally to the increase of line speed to maintain the blast density on the surface of the steel sheet, the reduction in the surface roughness created on the surface of the steel sheet decreases the efficiency to create the surface roughness under the condition of increase in line speed or increase in blast quantity. Consequently, to prevent the degradation in the surface roughness of steel sheet under the condition of increase in the line speed, larger quantity of solid particles is requested to blast, which results in further decrease in the efficiency of creating surface roughness.

The problems described above, however, do not appear so significantly in the case of shot-blasting aiming at descaling of hot-rolled steel sheet, which uses coarse particles having 500 µm or larger size. This is because the solid particles blasted from a centrifugal blasting machine have large mass and large kinetic energy so that they gain sufficient collision speed to conduct descaling even if they collide with each other in air before colliding against the surface of the steel sheet. Therefore, the above-described problems are specific ones to attain the object of the present invention to create uniform and dense surface roughness on the surface of the steel sheet by blasting solid particles having 300 µm or smaller size.

### SUMMARY OF THE INVENTION

It is an object of the present invention to provide an apparatus for surface treatment which is able to efficiently create a surface roughness on a steel sheet even when the steel sheet travels at a high speed, further to an apparatus for surface treatment which is able to provide compact design therefor, and a method for producing metallic sheet using the apparatus.

To attain the object, the present invention provides an apparatus for surface treatment of metallic sheet having: a centrifugal blasting machine for blasting solid particles having a mean particle diameter of 30 to 300 µm against the metallic sheet which continuously travels, which centrifugal blasting machine is positioned so as the line of intersection between the plane vertical to the rotation axis of the centrifugal rotor thereof and the plane of the metallic sheet to become parallel to or 45° or smaller angle to the direction of travel of the metallic sheet.

The metallic sheet according to the present invention is mainly a cold-rolled steel sheet and a surface-treated steel sheet. The cold-rolled steel sheet includes, other than ordinary steel sheet, high carbon steel sheet, magnetic steel sheet, and special grade steel sheet such as invar sheet. The surface-treated steel sheet includes various kinds of surface-treated steel sheets subjected to surface treatment by hot-dip coating, electroplating, or the like, and as of these, galvanized steel sheet is a main article because the requirements often given are press-formability and image sharpness after coating, which needs dense and uniform surface roughness (microscopic irregularity morphology on the surface) on the steel sheet. Accordingly, descaling treatment of hot-rolled steel sheet aiming at grinding by blasted solid particles is not the target of the present invention. As described above, the above-described means and other means mainly deal with steel sheet such as cold-rolled steel sheet and surface-treated steel sheet. Nevertheless, the present invention is applicable to other metallic sheets such as aluminum or aluminum alloy sheets, and titanium or titanium alloy sheets, and the present invention deals with all kinds of metallic sheets.

The blasting of solid particles having a mean particle diameter of 30 to 300 µm against the surface of steel sheet is given to create dense irregularities at short pitch thereof on the surface of steel sheet. That is, blasting solid particles against the surface of steel sheet converts the kinetic energy of the solid particles into the press-in work thereof into the surface of steel sheet, thus creating dents (concavities) on the surface of steel sheet. The size of dents decreases with the reduction in the size of solid particles, and forms fine concavities.

That is, blasting large quantity of solid particles forms large number of fine dents on the surface of steel sheet, and creates microscopic irregularities having dense and very short distance between dents. By creating what is called the "dimple" morphology, or forming large number of concavities in a unit area, on the surface, the oil-retaining capacity between the die and the steel sheet during press-forming is improved to significantly improve the press-formability.

If the mean particle diameter of the solid particles exceeds 300 µm, a short-pitched microscopic irregularities cannot be created, thus the effect to improve the press-formability cannot be expected, and the long-pitched irregularities, or the waviness, increase on the surface of steel sheet, which results in degraded appearance and image sharpness after coating. In this respect, for creating surface roughness on the surface of cold-rolled steel sheet or surface-treated steel sheet, the mean particle diameter of solid particles is requested to adjust to 300 µm or smaller, and preferably adjust to 150 µm or smaller.

The means for blasting solid particles adopts the above-described centrifugal blasting machine because of the superiority of centrifugal blasting machine in increasing the blast quantity to continuously treat a steel sheet with wide width under a high traveling speed. In this case, if the size of solid particles is smaller than 30 µm, the blasted solid particles are likely decelerated in air, and the collision speed thereof against the surface of steel sheet decreases to fail in forming sufficient size of dents on the surface of steel sheet, in some cases. Consequently, the mean particle diameter of the solid particles is specified to 30 µm or more, and preferably 50 µm or more.

According to the means described above, the centrifugal blasting machine is positioned so as the line of intersection between the plane vertical to the rotation axis of the centrifugal rotor and the plane of the metallic sheet to become parallel to or angles of 45° or smaller to the direction of travel of the metallic sheet. The centrifugal blasting machine supplies solid particles to the central section of the centrifugal rotor, and accelerates the solid particles applying centrifugal force thereto using a rotating impeller and plurality of vanes, thus blasts the solid particles against the object. At this moment, the solid particles are blasted within a plane vertical to the rotation axis of the rotating section of rotor, and are spread in fan shape over the surface of steel sheet to collide thereto, (the blasted range having a spread is hereinafter referred to as the "long side of blast range", and the vertical direction thereto is referred to as the "short side of blast range").

On the other hand, the positioning of a centrifugal blasting machine according to the prior art is to position thereof so as the long side of blast range to become vertical to or angles of 70° or larger to the direction of travel of the steel sheet. According to the arrangement of centrifugal blasting machines given in Fig. 8, a specified quantity of solid particles is blasted while the steel sheet 1 passes through the short side of a blast range, given in the figure, so that the particle density in air becomes very high, which likely induces interference between particles. That is, according to the prior art, large number of solid particles are blasted in a narrow range (within the distance of short side of blast range), thus degrading the efficiency to create surface roughness.

To the contrary, the means according to the present invention secures long blast range in the direction of travel of the steel sheet so that, even the same quantity of solid particles is blasted, the particle density in air is reduced. That is, when the solid particles are blasted to wider area, the distance between the particles in air becomes large, which suppresses the interference between particles in air even when the quantity of blasted solid particles is increased.

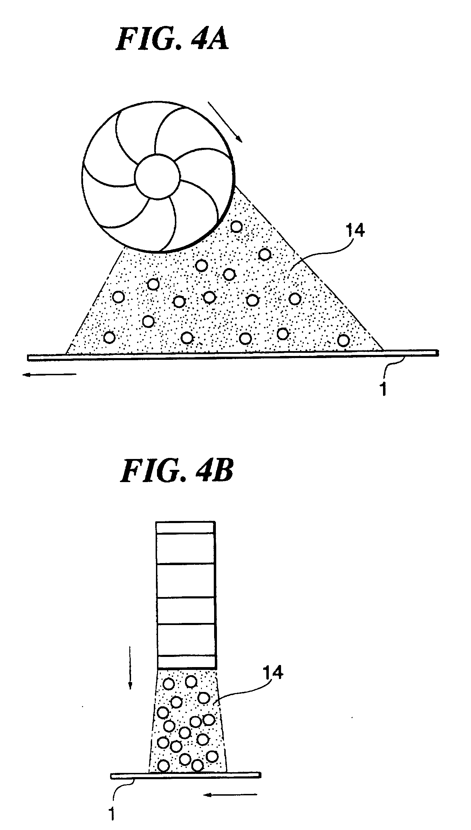

Fig. 4 is a schematic drawing expressing the above-described state. Fig. 4 illustrates the behavior of blasted particles or repelled particles viewed from vertical position to the traveling direction of the steel sheet. Fig. 4(a) is the means according to the present invention, and Fig. 4(b) is that of the prior art, comparing the behavior of solid particles for the same blast density to the surface of steel sheet. As shown in the figure, the means according to the present invention reduces the particle density in air compared with that of the prior art, and the interference between particles in air becomes less.

According to the surface treatment apparatus for metallic sheet described above, a plurality of the centrifugal blasting machines is arranged in the width direction of metallic sheet, and at least two centrifugal blasting machines among them are preferably arranged so as the line of intersection between the plane vertical to the rotation axis of the centrifugal rotor and the plane of the metallic sheet to become parallel each other.

For a steel sheet having wide width, only one centrifugal blasting machine often fails to create'surface roughness over the whole surface area thereof. Accordingly, a plurality of centrifugal blasting machines is required to arrange in the width direction of steel sheet to create surface roughness. In this case, however, the solid particles blasted from a centrifugal blasting machine may hinder the creation of surface roughness by other centrifugal blasting machine.

To this point, there is an arrangement of plurality of centrifugal blasting machines to avoid the interference between solid particles. That is, the centrifugal blasting machines are arranged so as the spreading direction of solid particles blasted from a centrifugal blasting machine to become parallel to the spreading direction thereof blasted from other centrifugal blasting machine, thus avoiding entering the solid particles spread from a centrifugal blasting machine into the blast range of other centrifugal blasting machine. The means according to the present invention solves the above-described problems, on applying plurality of centrifugal blasting machines, by arranging them so as the long side of the blast range of the respective centrifugal blasting machines to become parallel with each other.

Regarding the above-described surface-treatment apparatus for metallic sheet, it is preferable that a plurality of the centrifugal blasting machines is arranged in the width direction of metallic sheet, and at least two centrifugal blasting machines among the plurality of centrifugal blasting machines are driven by the common driving shaft at the respective centrifugal rotors thereof.

The surface-treatment apparatus for metallic sheet arranges centrifugal blasting machines so as the line of intersection between the plane vertical to the rotation axis of the centrifugal rotor and the plane of the metallic sheet to become parallel to or 45° or smaller angle to the direction of travel of the metallic sheet. By selecting a blast range elongated in the direction of travel of the steel sheet, the interference between the blasted particle and other blasted particle or repelled particle is reduced.

Since, however, the blast range of a single centrifugal blasting machine is not varied, if the blast range is elongated in the direction of travel of the steel sheet, the number of necessary centrifugal blasting machines to cover the width of the steel sheet increases. In this case, if a plurality of centrifugal blasting machines is arranged in the width direction of steel sheet, the total apparatus length increases to often fail to install the apparatus in an existing continuous annealing line or hot-dip coating line.

In particular, since the motor section to drive the centrifugal rotor of the centrifugal blasting machine is required, there may occur a restriction on arranging plurality of centrifugal blasting machines. To this point, according to the means of the present invention, a single rotary shaft drives plurality of centrifugal rotors, thus allowing arranging the long side of blast range in parallel with each other, and shortening the total apparatus length.

The blast range of a centrifugal blasting machine is close to rectangle, and assumes the presence of a long side and a short side. Even with an air blasting machine, however, the nozzle shape with ellipse or flat may form a blast range close to rectangle giving a long side and a short side. Accordingly, with a blasting apparatus other than centrifugal blasting apparatus, if the blast range has a long side and a short side, similar effect with the one described above is attained in view of reduction of interference between solid particles and of avoidance of degraded efficiency in creating surface roughness even under the blast of large quantity of solid particles. Therefore, the present invention is independent of the means for blasting solid particles, and is widely utilizable if the blast range has a shape close to rectangle. Thus, an apparatus which substitutes the centrifugal blasting machine with a blasting machine having that feature is equivalent with the present invention.

Furthermore, the present invention provides a method for producing metallic sheet having the step of applying surface treatment to a continuously traveling metallic sheet by blasting solid particles having 30 to 300 µm of mean particle diameter against the metallic sheet using the above-described surface treatment apparatus for metallic sheet.

In addition, the present invention provides a hot-dip coating line for metallic sheet, having a hot-dip coating line and the above-described apparatus for surface treatment of metallic sheet located at downstream side of a cooling device or an alloying furnace after a coating bath in the hot-dip coating line.

Further the present invention provides a continuous annealing line for metallic sheet, having a continuous annealing line and the above-described apparatus for surface treatment of metallic sheet located at downstream side of an annealing furnace in the annealing line.

The apparatus for surface treatment of metallic sheet according to the present invention is positioned in a metallic sheet producing line, and is applied to manufacture metallic sheet having excellent surface characteristics. For example, the apparatus for surface treatment is located at least one of upstream side and downstream side of the temper rolling mill after the hot-dip coating line or the continuous annealing line, thus producing hot-dip galvanized steel sheet and cold-rolled steel sheet having superior surface characteristics.

The hot-dip coated steel sheet described herein includes hot-dip galvanized steel sheet, alloyed hot-dip galvanized steel sheet, hot-dip Al-Zn alloy coated steel sheet, and hot-dip Zn-Al alloy coated steel sheet. The surface characteristics described herein designate the characteristics of surface such as press-formability and image sharpness after coating, which characteristics give influence on the quality of steel sheet.

### BRIEF DESCRIPTION OF THE DRAWINGS

Fig. 1 is a schematic drawing of a surface treatment apparatus for steel sheet according to a first embodiment for carrying out the present invention.
Fig. 2 is a schematic drawing of a surface treatment apparatus for steel sheet according to a second embodiment for carrying out the present invention.
Fig. 3 shows the blast range in the embodiment given in Fig. 2 according to the present invention.
Fig. 4(a) shows the particle density of solid particles in air according to the present invention.
Fig. 4(b) shows the particle density of solid particles in air according to the prior art.
Fig. 5 is a schematic drawing of an example of centrifugal blasting machine used in the embodiment according to the present invention.
Fig. 6 shows an example of circulation system of solid particles, including the centrifugal blasting machine used in the embodiment according to the present invention.
Fig. 7 is a schematic drawing of interference state between the repelled solid particles and the blasted solid particles on steel sheet.
Fig. 8 is a schematic drawing of an example of arrangement of centrifugal blasting machines according to the prior art, as a comparative example.
Fig. 9 shows the relation between the blast quantity of solid particles and the mean roughness on the surface of steel sheet per a single blasting machine in an example according to the present invention and in a comparative example, respectively.
Fig. 10 is a schematic drawing of the blast density distribution of blasted particles given by a centrifugal blasting machine.
Fig. 11 shows the mean roughness on the surface of steel sheet in an example according to the present invention and in a comparative example, respectively.
Fig. 12 shows the mean roughness distribution on the surface of steel sheet in the width direction thereof in an example according to the present invention.
Fig. 13 is a schematic drawing of spreading blasted particles using a centrifugal blasting machine.
Fig. 14 is a schematic drawing of spreading blasted particles on the steel sheet using plurality of centrifugal blasting machines arranged in the width direction thereof according to the prior art.
Fig. 15 illustrates the arrangement of plurality of centrifugal blasting machines in the width direction of steel sheet and in the direction of travel of the steel sheet according to the prior art.
Fig. 16 illustrates the arrangement of plurality of centrifugal blasting machines in the width direction of steel sheet according to the arrangement of centrifugal blasting machines in an example of the present invention.
Fig. 17 shows the blast range in the embodiment according to the present invention, giving the blast ranges of the centrifugal blasting machines arranged conforming to Fig. 1.
Fig. 18 shows the blast range in the embodiment according to the present invention, giving the blast ranges of the centrifugal blasting machines arranged conforming to Fig. 2.
Fig. 19 is a graph showing the mean roughness on the surface of steel sheet in the width direction thereof in an example according to the present invention.
Fig. 20 is a schematic drawing of a blast density distribution in the width direction of steel sheet.
Fig. 21 is a schematic drawing of a blast density distribution in the width direction of steel sheet.

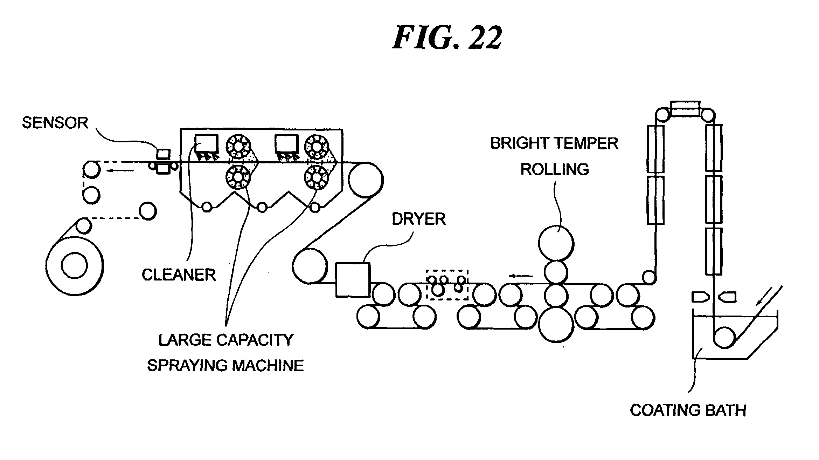

Fig. 22 shows an example of arrangement of blasting machines in a hot-dip coating line.

### EMBODIMENT FOR CARRYING OUT THE INVENTION

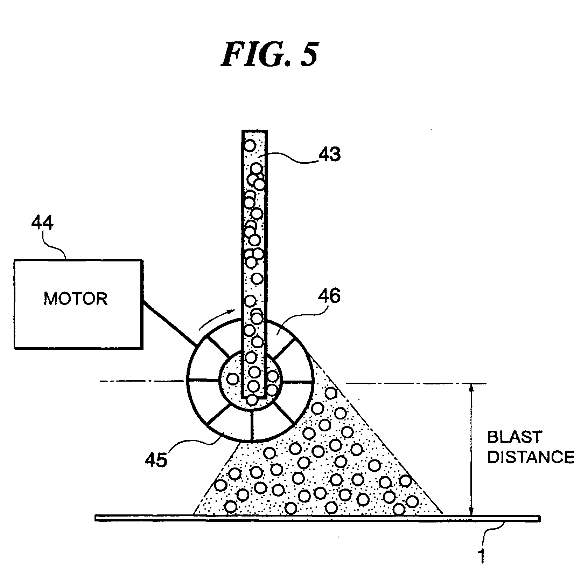

Fig. 5 is a schematic drawing of an example of centrifugal blasting machine used in an embodiment according to the present invention. The centrifugal blasting machine is an apparatus to accelerate solid particles utilizing centrifugal force generated by an impeller 45 and a vane 46, which are driven by a motor 44, (the impeller 45, the vane 46, and sections rotating therewith are named the "centrifugal rotor"). The solid particles stored in a tanker or the like are fed to the central section of the impeller 45 of the centrifugal blasting machine via a particle feed pipe 43. Generally the outer diameter of the vane section of the centrifugal rotor type blasting machine is about 300 to 500 mm. When the distance between the center of rotation of the rotor and the steel sheet 1, (hereinafter referred to as the "blast distance"), is large, the size of blasted solid particles is small, and the deceleration of the blasted particles in air becomes large. Accordingly, the embodiment for carrying out the present invention preferably has 700 mm or smaller blast distance, and more preferably the blast distance is same magnitude with the diameter of the vane section.

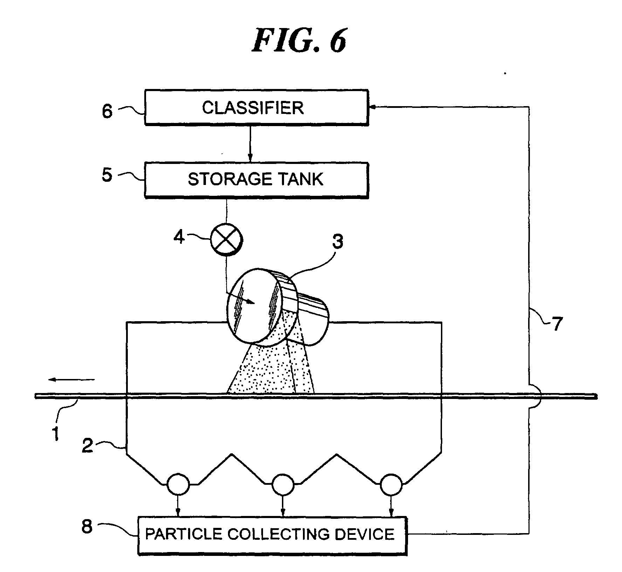

Fig. 6 shows the configuration of apparatus for blasting solid particles using the centrifugal blasting machine of Fig. 5. The centrifugal blasting machine given in Fig. 5 corresponds to the centrifugal blasting machine 3 in Fig. 6. According to the embodiment of the present invention, the section blasting solid particles, in the centrifugal blasting machine 3, is located in the blasting chamber 2, and forms a space surrounded by partition to prevent scattering-out the blasted solid particles. Within the blasting chamber 2, the blasted solid particles collide against the surface of steel sheet to leave dimple-shape dents thereon, then repel therefrom to spread in surrounding space. Many of the repelled particles fall down to the lower section of the blasting chamber 2 by gravity. In particular, most of the repelled particles are removed from the steel sheet by the air flow generated by the rotation of vane, and fall down into the lower section of the blasting chamber. The fallen particles are collected by a particle collecting device 8. The collected solid particles are fed to a 6. The solid particles which are pulverized in the classifier 6 are removed from the circulation system, while other particles are stored in a storage tank 5.

There is a continuous route from the storage tank 5 to the centrifugal blasting machine 3 via the particle feed pipe, placing a particle supply rate adjusting device 4 therebetween. The particle supply rate adjusting device 4 may be a means to adjust the gate opening depending on the operating conditions such as the line speed, the target surface roughness of steel sheet, and the required blast quantity of solid particles.

Fig. 6 shows the state that the solid particles are blasted against the upper face of the steel sheet 1 using the centrifugal blasting machine. The solid particles, however, may be blasted to both the upper face and the lower face of the steel sheet 1. If the width of steel sheet is large, a plurality of centrifugal blasting machines is arranged in the width direction of steel sheet. Furthermore, plurality of centrifugal blasting machines may be arranged in the longitudinal direction of steel sheet. The arrangement may respond also to the line speed, the available blast quantity of solid particles for a single centrifugal blasting machine, and other variables.

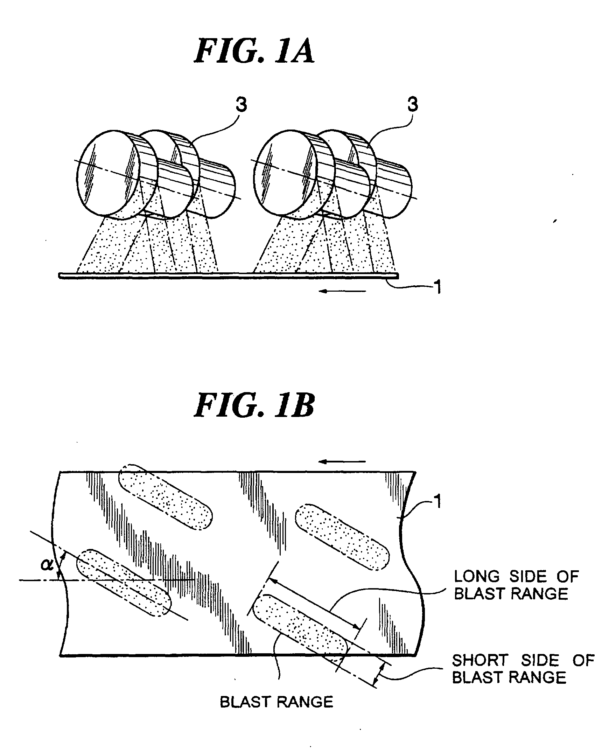

An example of the embodiment for carrying out the present invention is the arrangement of centrifugal blasting machines given in Fig. 1. That is, the centrifugal blasting machines 3 are arranged so as the line of intersection between the plane vertical to the rotation axis of the centrifugal rotor and the plane of the steel sheet becomes an angle á of 30° to the direction of travel of the steel sheet. In this case, at an arbitrary position in the width direction of the steel sheet, the time for passing through a blast range is secured for longer period than that of the arrangement according to the prior art shown in Fig. 8. In other words, if the blast density to the surface of steel sheet is the same, the particle density of the blasted solid particles becomes smaller than that of the prior art, and the degradation of efficiency to create the surface roughness is prevented.

When the embodiment for carrying out the present invention given in Fig. 1 is compared with the embodiment of the prior art given in Fig. 8, the embodiment according to the present invention raises an anxiety that the blast range in the width direction of steel sheet covered by a single centrifugal blasting machine may decrease compared with that of the prior art shown in Fig. 8, which increases the number of centrifugal blasting machines necessary to cover the whole width of steel sheet, thus increases the total necessary power.

If, however, the embodiment according to the present invention is compared with the embodiment of the prior art, it is understood that, to attain the same blast density against the surface of steel sheet, the quantity of blasting solid particles per a single centrifugal blasting machine according to the prior art is large, while the embodiment according to the present invention needs less quantity of solid particles to be blasted from a single centrifugal blasting machine. As a result, for treating a steel sheet having the same width with the same blast density, the total quantity of blasted solid particles is the same, and the required motor power is, in principle, the same for both embodiments. According to the embodiment of the present invention, the efficiency to create surface roughness increases so that the blast quantity of the solid particles is reduced from that of the prior art, which allows totally decreasing the necessary power by the embodiment according to the present invention.

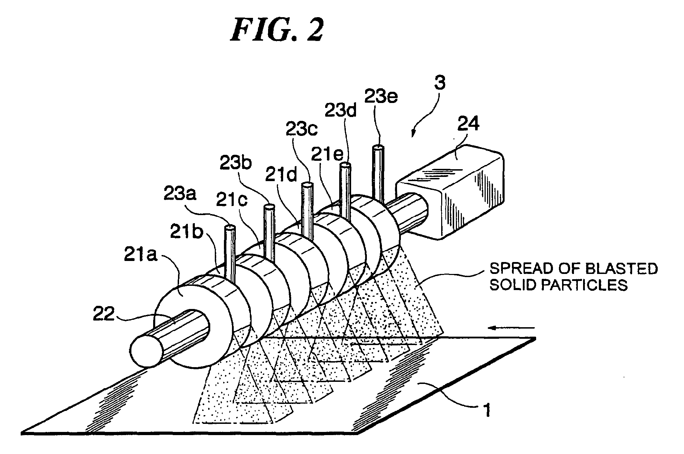

Fig. 2 shows another example of the embodiment according to the present invention. The machine has a mechanism of plurality of centrifugal rotors connected with each other on the same shaft 22, which shaft 22 is driven by a single motor 24. Each of the centrifugal rotors 21a to 21e has an impeller and a vane. The centrifugal rotor sections in normal centrifugal blasting machine are arranged at certain spacing. The centrifugal rotor sections 21a to 21e have the respective solid particle feed pipes 23a to 23e therebetween. Thus the solid particles are fed to the respective centrifugal rotor sections 21a to 21e to blast thereof against the surface of steel sheet 1.

The centrifugal blasting machine having above-described configuration does not need to locate drive motor to each of the centrifugal rotor sections 21a to 21e. Furthermore, there is no limitation in the positioning of centrifugal blasting machine, which limitation occurs in the case of allotting drive motors for individual centrifugal rotor sections 21a to 21e, thus the compact design of total apparatus is attained.

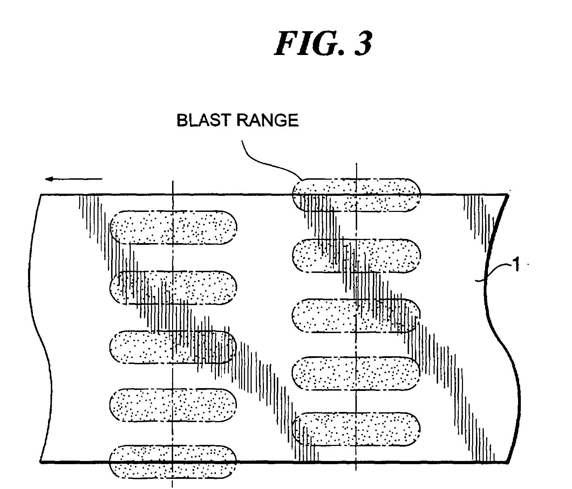

Fig. 3 shows the blast ranges on the surface of steel sheet using the above-described blasting machine. Fig. 3 is a schematic drawing of the blast ranges in the case that two sets of centrifugal blasting machines given in Fig. 2 are applied. Since the centrifugal blasting machine shown in Fig. 2 has the solid particle feed pipes 23a to 23e between the centrifugal rotor sections 21a to 21e, respectively, there are appeared areas where the solid particles are not blasted on the surface of steel sheet at places corresponding to the respective solid particle feed pipes. Consequently, by combining that type of centrifugal blasting machines, the area where the surface roughness could not be created at upstream can obtain the surface roughness by the downstream centrifugal blasting machine, thus attaining a specified surface roughness along the whole width of steel sheet.

Between the two units of centrifugal blasting machines, an air purge nozzle may be placed, although the figure does not show, to blow off the solid particles scattered on the steel sheet to prevent the scattering of solid particles in adjacent blast ranges to inhibit the creation of surface roughness.

### EXAMPLE 1

Example 1 according to the present invention is the result of creating a roughness on the surface of steel sheet using four units of centrifugal blasting machines given in Fig. 1. Also there is given the description of a comparative example which is the result of creating a roughness on the surface of steel sheet using two units of centrifugal blasting machines given in Fig. 8. For the case of Fig. 1, the line of intersection between the plane vertical to the rotation axis of the centrifugal rotor and the plane of the steel sheet was set to have an angle á of 30° to the direction of travel of the steel sheet. For the case of Fig. 8, on the other hand, the line of intersection between the plane vertical to the rotation axis of the centrifugal rotor and the plane of the steel sheet was set to become vertical to the direction of travel of the steel sheet.

Example 1 used a hot-dip galvanized steel sheet as the steel sheet to create a surface roughness. The hot-dip galvanized steel was prepared from a cold-rolled steel sheet having 0.8 mm in thickness and 800 mm in width, applying a coating film made of mainly ç phase thereon. After applying the hot-dip galvanization, the material was adjusted to give 0.8% of elongation by temper rolling using a bright roll for leveling the irregularities on the coating film to reduce waving.

The solid particles used to create the surface roughness were the solid particles of SUS 304, having 85 µm of mean particle diameter. The solid particles were in almost spherical shape prepared by gas atomizing method. Since the solid particles are able to form dimple-shape microscopic irregularities on the surface of steel sheet, a steel sheet having excellent press-formability is attained.

The applied centrifugal blasting machine was a normal centrifugal blasting machine shown in Fig. 5, having a vane with 330 mm of outer diameter and 3900 rpm of maximum rotational speed. The weight of solid particles which can be blasted by the centrifugal blasting machine is 100 kg/min per unit thereof.

According to Example 1, the blast distance was set to 350 mm and the rotational speed of the centrifugal rotor was set to 3900 rpm, while changing the line speed of steel sheet in a range from 5 to 50 mpm to create the surface roughness on the steel sheet. The feed rate of solid particles to each centrifugal blasting machine was adjusted to 5 kg/m² of blast density on the surface of steel sheet.

Specifically, for the case of 50 mpm of line speed, Example 1 of the present invention given in Fig. 1 adopted 50 kg/min of blast quantity of solid particles for each centrifugal blasting machine, and the comparative example given in Fig. 8 adopted 100 kg/min of blast quantity of solid particles for each centrifugal blasting machine. That is, the total quantity of blast quantity per unit time by the total centrifugal blasting machines was set to the same between Example 1 and the comparative example. The blast quantity of each centrifugal blasting machine was adjusted proportional to the line speed, and the blast density was adjusted to the same under both conditions.

From each steel sheet which was provided with surface roughness by blasting solid particles thereto, small samples were cut to collect. The surface morphology of the samples was evaluated. The typical evaluation index was selected to the mean roughness Ra of steel sheet.

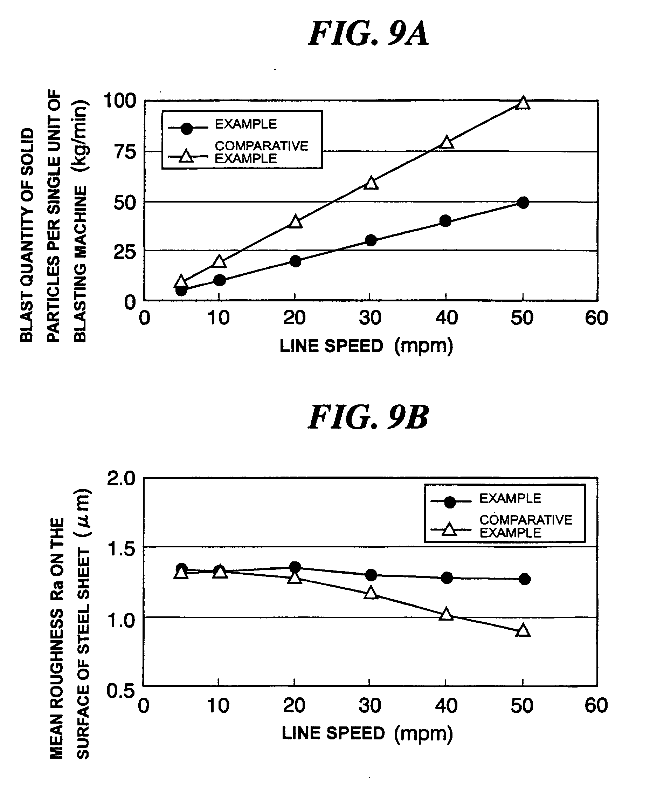

Regarding the variations of mean roughness Ra on the surface of steel sheet with line speed in Example 1, Fig. 9 shows the comparison between Example 1 and the comparative example according to the prior art. The figure gives the relation between the blast quantity of solid particles and the line speed. The result of the comparative example shows that the increased blast quantity of solid particles degrades the mean roughness Ra on the surface of steel sheet in spite of the same blast density against the steel sheet. This is because the particle density of the blasted solid particles in air increases with the increase in the blast quantity of solid particles, and the solid particles interfere with each other to increase the number of solid particles which fail in colliding against the surface of steel sheet at a sufficient speed.

On the other hand, according to Example 1, at a low line speed, the mean roughness Ra is almost the same with that of the comparative example. However, when the line speed is increased and the blast quantity of solid particles is increased, the difference between Example 1 and the comparative example becomes distinctive. That is, Example 1 varies the mean roughness created on the surface of steel sheet very little even at increased line speeds, and does not degrade the efficiency of creating surface roughness.

The reason of the phenomenon is the following. At small line speeds, the particle density is inherently low even in the prior art so that the interference between solid particles raises no significant problem. When, however, the line speed increases and the blast quantity of solid particles increases, the prior art raises significant interference between solid particles to degrade the mean roughness Ra. To the contrary, Example 1 hardly induces that kind of interference, thus the difference between the present invention and the prior art becomes distinctive in treating steel sheet at high travel speeds.

As described above, according to Example 1, the difference from the comparative example of the prior art becomes large at 50 mpm or larger line speed, and a significant effect appears at 100 mpm or larger line speed.

### EXAMPLE 2

Example 2 according to the present invention is the result of creating a roughness on the surface of steel sheet using the centrifugal blasting machine given in Fig. 2. In this case, the line of intersection between the plane vertical to the rotation axis of the centrifugal rotor and the plane of the steel sheet was set to become parallel to the direction of travel of the steel sheet. As a comparative example, the description is given also to the result of creating a roughness on the surface of steel sheet using two units of centrifugal blasting machines applied in Example 1, shown in Fig. 8.

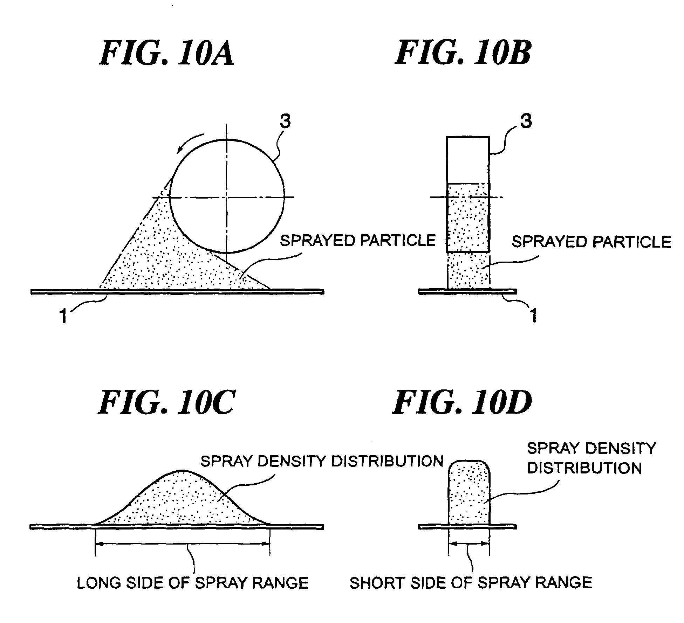

Example 2 according to the present invention is the result of creating a roughness on the surface of steel sheet using the centrifugal blasting machine given in Fig. 2. In this case, the line of intersection between the plane vertical to the rotation axis of the centrifugal rotor and the plane of the steel sheet was set to become parallel to the direction of travel of the steel sheet. In Example 2, two rows of the blasting machines were applied in a staggered arrangement to blast solid particles over the whole width of steel sheet, and each row has five centrifugal rotors. A comparative example adopted two units of centrifugal blasting machines applied in Example 1, shown in Fig. 8. At each edge section of long side in a blast range, the arrangement of blasting machines is requested to overlap a part of the respective blast ranges with each other because the centrifugal blasting machine unavoidably generates a density distribution of the blasted particles in the rotational direction of the centrifugal rotor, (or along the long side of blast range), which is shown in Fig. 10. That is, unless the sections of decreased particle density of the blasted particles are overlapped with each other at each edge section of the long side of blast range to increase the total blast density, a uniform surface roughness in the width direction of steel sheet cannot be attained.

Example 2 used a hot-dip galvanized steel sheet as the steel sheet for creating surface roughness. The hot-dip galvanized steel sheet was prepared from a cold-rolled steel sheet having 0.8 mm in thickness and 800 mm in width, applying a coating film made of mainly ç phase thereon. After applying the hot-dip galvanization, the material was adjusted to give 0.8% of elongation by temper rolling using a bright roll for leveling the irregularities on the coating film to reduce waving.

The solid particles used to create the surface roughness were the solid particles of SUS 304, having 85 µm of mean particle diameter. The solid particles were in almost spherical shape prepared by gas atomizing method. Since the solid particles are able to form dimple-shape microscopic irregularities on the surface of steel sheet, a steel sheet having excellent press-formability is attained.

The applied centrifugal blasting machine was a normal centrifugal blasting machine shown in Fig. 5, having a vane with 330 mm of outer diameter and 3900 rpm of maximum rotational speed. The weight of solid particles which can be blasted by the centrifugal blasting machine is 100 kg/min per unit thereof.

According to Example 2, the blast distance was set to 350 mm and the rotational speed of the centrifugal rotor was set to 3900 rpm, while changing the line speed of steel sheet in a range from 10 to 160 mpm to create the surface roughness on the steel sheet. The feed rate of solid particles to each centrifugal blasting machine was adjusted to 5 kg/m² of blast density on the surface of steel sheet.

Specifically, for the case of 50 mpm of line speed, Example 2 given in Fig. 2 applied 5 units x 2 rows of blasting machines to cover the blast range shown in Fig. 3, with 20 kg/min of blast quantity of solid particles for each centrifugal blasting machine. In a comparative example shown in Fig. 8, however, two units of blasting machines were arranged with 100 kg/min of blast quantity of solid particles per one unit. That is, the total quantity of blast quantity per unit time by the total centrifugal blasting machines was set to the same between Example 2 and the comparative example. The blast quantity of each centrifugal blasting machine was adjusted proportional to the line speed, and the blast density was adjusted to the same under both conditions.

From each steel sheet which was provided with surface roughness by blasting solid particles thereto, small samples were cut to collect. The surface morphology of the samples was evaluated. The typical evaluation index was selected to the mean roughness Ra of steel sheet.

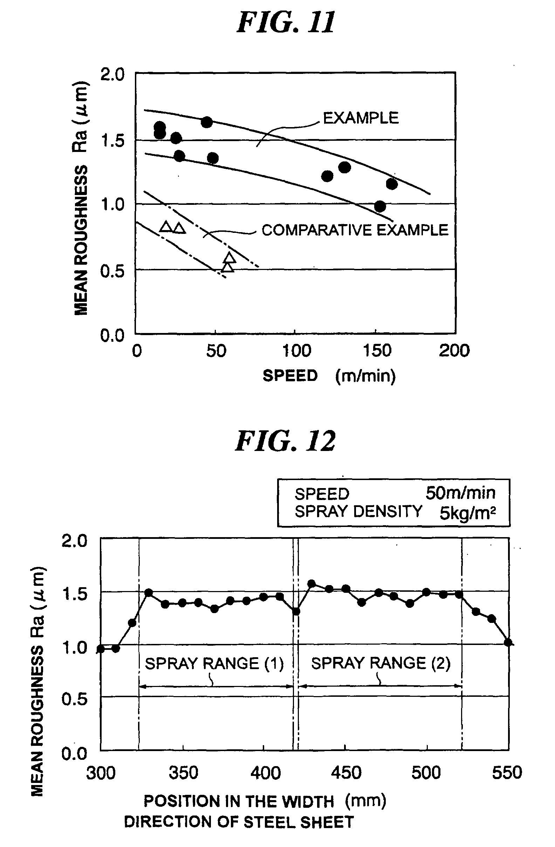

Regarding the variations of mean roughness Ra on the surface of steel sheet with line speed in Example 2, Fig. 11 shows the comparison between Example 2 and the comparative example according to the prior art. The result of comparative example gave a degraded mean roughness Ra on the surface of steel sheet in spite of the same blast density against the steel sheet. To the contrary, Example 2 kept the mean roughness Ra within a range from 1.0 to 1.5 µm even at 150 mpm or higher line speed to maintain the desired roughness. According to Example 2, since wide blast range is secured in the longitudinal direction of the steel sheet even at increased line speeds, the particles in air becomes less dense, and interference therebetween occurs less, thus the desired surface roughness is secured.

With the arrangement of blasting machines in Example 2, the uniformity of surface roughness was evaluated at the boundary of adjacent blast ranges. Fig. 12 shows the surface roughness distribution on steel sheet in the width direction thereof under blasting from only two adjacent centrifugal rotors. As shown in the figure, almost uniform surface roughness is attained even at the boundary of adjacent blast ranges.

Even with the arrangement of blasting machines according to the comparative example referred in the description of Example 2, the desired surface roughness can be created by reducing the blast quantity per unit of centrifugal blasting machine and by arranging a plurality of blasting machines in the longitudinal direction of steel sheet. That type of arrangement of blasting machines, however, increases the length of apparatus, and the increased total length of apparatus raises a problem of increased investment. The problem is described below.

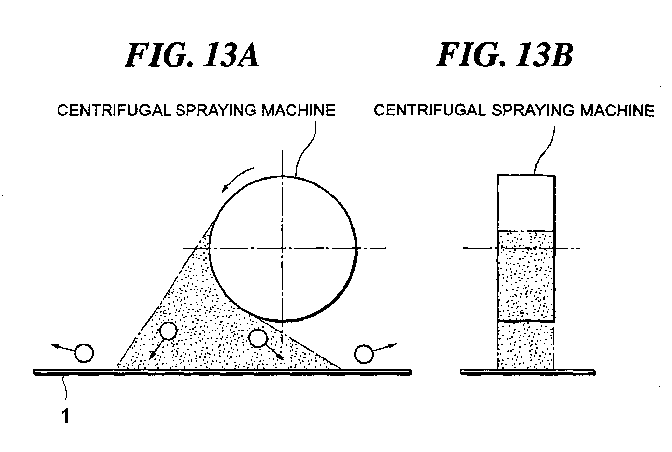

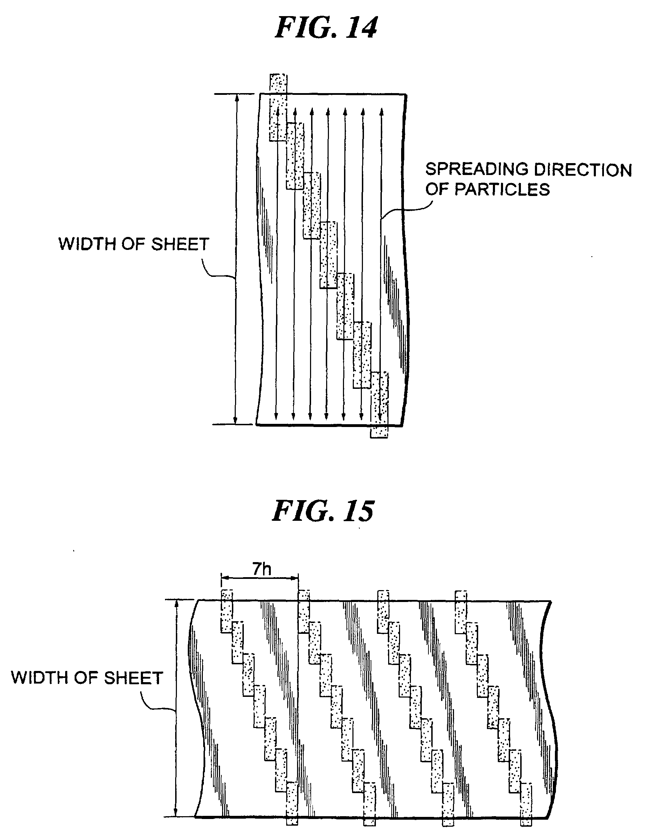

The particles blasted by a centrifugal blasting machine collide against the surface of steel sheet, as shown in Fig. 13, to form dents thereon, then move in the direction of rotation of the centrifugal rotor. When other centrifugal blasting machine is positioned in the direction of rotation of the rotor (the direction vertical to the rotation axis), solid particles enter the blast range of the original blasting machine. As a result, the particles blasted by the original centrifugal blasting machine are interfered by the entering solid particles blasted by other blasting machine, which results in reduction in the speed of the blasted particles to fail in creating satisfactory surface roughness. Accordingly, for the case of arrangement of plurality of centrifugal blasting machines according to the comparative example, placing other centrifugal blasting machine in the scattering direction of solid particles blasted by the original centrifugal blasting machine, as shown in Fig. 14, raises a problem of treatment.

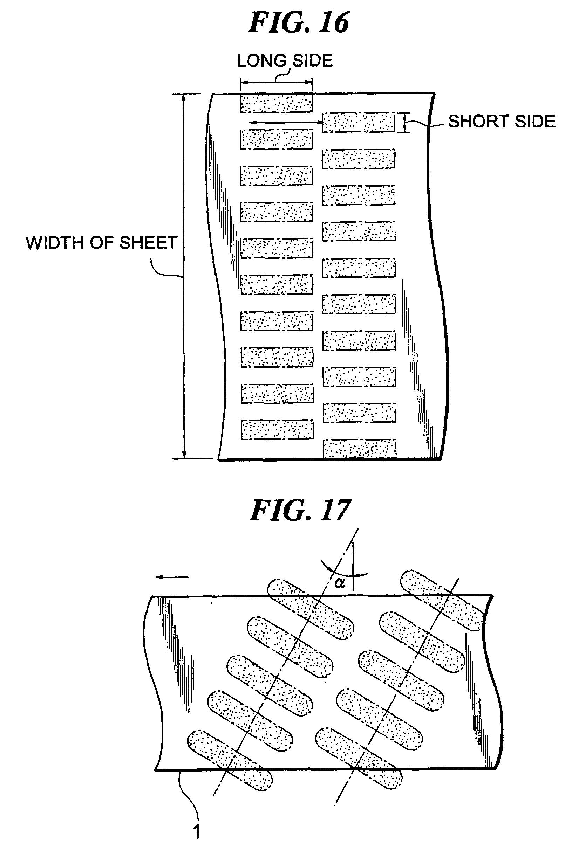

Consequently, to attain a desired surface roughness with the arrangement of blasting machines according to the comparative example while reducing the blast quantity per unit blasting machine to reduce the interference between particles, the arrangement thereof shown in Fig. 15 is required. In that case, it is necessary that at least seven units of centrifugal blasting machines are arranged in the width direction of steel sheet, and that four sets of these seven units or larger number of blasting machines are combined. This arrangement requires at least 28h of apparatus length (2800 mm) in the traveling direction of steel sheet. To the contrary, according to Example 2, the longitudinal apparatus length is 2W (800 m) or more, as shown in Fig. 16. Therefore, even when the space for installing the apparatus has a limitation, as in the case of installation of the apparatus in a hot-dip coating line or a continuous annealing line, Example 2 can provide high efficiency for creating surface roughness while keeping the total apparatus length short.

### EXAMPLE 3

Example 3 according to the present invention is the result of creating a roughness on the surface of steel sheet using: the centrifugal blasting machines arranged as given in Fig. 1, applied in Example 1, (hereinafter referred to as the "arrangement A"); and the centrifugal blasting machines arranged as given in Fig. 2, applied in Example 2, (hereinafter referred to as the "arrangement B").

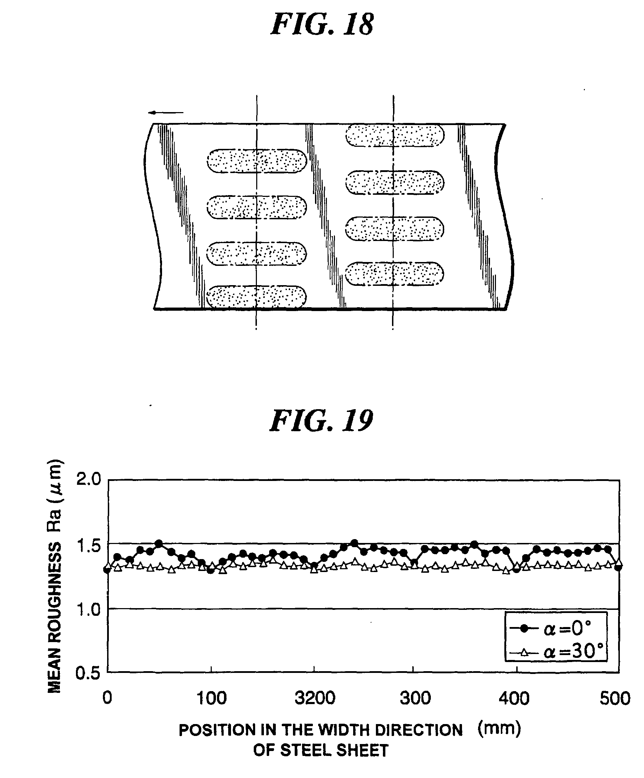

According to the arrangement A, the line of intersection between the plane vertical to the rotation axis of the centrifugal rotor of the centrifugal blasting machine and the plane of the metallic sheet is set to have an angle á (á=30° ) to the direction of travel of the metallic sheet. The arrangement gives the blast ranges shown in Fig. 17. For the arrangement B, the line of intersection between the plane vertical to the rotation axis of the centrifugal rotor of the centrifugal blasting machine and the plane of the metallic sheet is set to become parallel (á=0° ) to the direction of travel of the metallic sheet. The arrangement gives the blast ranges shown in Fig. 18.

Example 3 used a hot-dip galvanized steel as the steel sheet for creating surface roughness. The hot-dip galvanized steel sheet was prepared from a cold-rolled steel sheet having 0.8 mm in thickness and 800 mm in width, applying a coating film made of mainly ç phase thereon. After applying the hot-dip galvanization, the material was adjusted to give 0.8% of elongation by temper rolling using a bright roll for leveling the irregularities on the coating film to reduce waving.

The solid particles used to create the surface roughness were the solid particles of SUS 304, having 85 µm of mean particle diameter. The solid particles were in almost spherical shape prepared by gas atomizing method. Since the solid particles are able to form dimple-shape microscopic irregularities on the surface of steel sheet, a steel sheet having excellent press-formability is attained.

The applied centrifugal blasting machine was a normal centrifugal blasting machine shown in Fig. 5, having a vane with 330 mm of outer diameter and 3900 rpm of maximum rotational speed. The weight of solid particles which can be blasted by the centrifugal blasting machine is 100 kg/min per unit thereof.

According to Example 3, the blast distance was set to 350 mm, the rotational speed of the centrifugal rotor was set to 3900 rpm, and the line speed of steel sheet was set to 50 mpm to create the surface roughness on the steel sheet. The feed rate of solid particles to each centrifugal blasting machine was adjusted to 5 kg/m² of blast density on the surface of steel sheet.

From each steel sheet which was provided with surface roughness by blasting solid particles thereto, small samples were cut to collect. The surface morphology of the samples was evaluated. The typical evaluation index was selected to the mean roughness Ra of steel sheet.

Regarding the variations of mean roughness Ra on the surface of steel sheet along the width thereof in Example 3, Fig. 19 shows the comparison between the arrangement A and the arrangement B of centrifugal blasting machines. For the arrangement A, ( in Fig. 19), the adjustment of overlapped blast regions for individual blasting machines is favorably performed so that the distribution of mean roughness Ra on the surface of steel sheet in the width direction thereof is flat and good compared with the result of the arrangement B ( in Fig. 19).

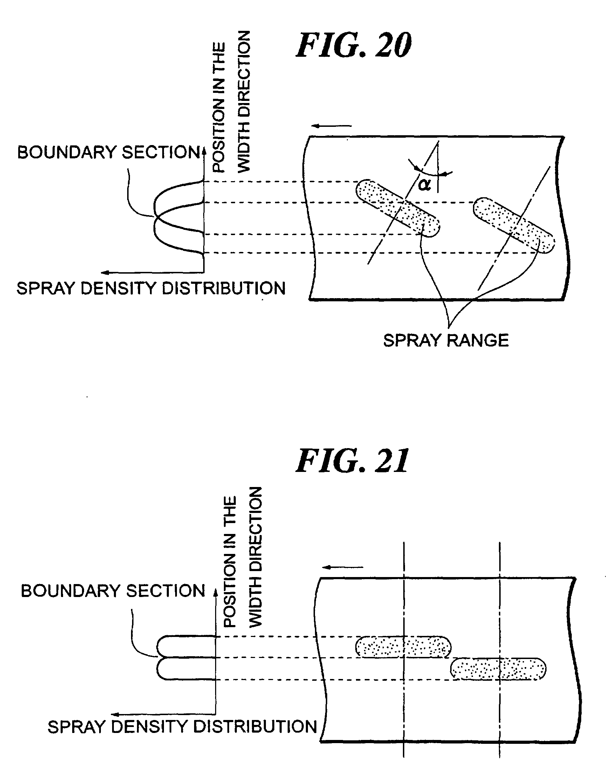

The superiority of the arrangement A is described below referring to the schematic drawings of Fig. 20 and Fig. 21. With the arrangement A, since the angle á of the blasting machine is 30° , the blast range per unit blasting machine in the width direction of steel sheet widens, and a certain blast density distribution widened in the width direction thereof is generated. That type of blast density distribution, however, can be eliminated by overlapping the adj acent blast ranges to each other, (Fig. 20). That is, for the case of arrangement B, or á=0° , the boundary between adjacent blast regions generates somewhat discontinuous area, though the blast density distribution in the width direction of steel sheet is small, (Fig. 15). To this point, by giving a slight angle á to the centrifugal blasting machine, as in the case of the arrangement A, the overlap margin is secured to assure smooth changes of surface roughness between adjacent blast ranges, thus eliminates the above-described discontinuous areas.

Consequently, it is preferable that, considering the uniformity of distribution of mean roughness on the steel sheet in the width direction thereof, the centrifugal blasting machines are arranged so as the line of intersection between the plane vertical to the rotation axis of the centrifugal rotor and the plane of the steel sheet to become some degree of angle to the direction of travel of the steel sheet, and more preferably 5° or more. If the angle is smaller than 5° , the adjustment of overlap of blast ranges of individual centrifugal blasting machine becomes difficult, and the uniform roughness distribution in the width direction of steel sheet becomes difficult to attain. On the other hand, if the angle exceeds 45° , sufficient roughness becomes difficult to create for the case of high line speeds, over 100 mpm. Accordingly, the angle is preferably 45° or smaller.

From the viewpoint of compact design of total apparatus, the practical angle range is from 5° to 30° .

### EXAMPLE 4

Fig. 16 shows an arrangement of the surface treatment apparatus according to the present invention on a hot-dip galvanizing line, as Example 4 of the present invention.

Example 4 is the result of adjusting the surface roughness using the apparatus shown in Fig. 1. The hot-dip galvanized steel sheets were prepared from cold-rolled steel sheets having 0.5 to 1.8 mm in thickness and 750 to 1850 mm in width, respectively, giving 0.8% of elongation by temper rolling. The elongation by temper rolling was applied to adjust the material, and the temper rolling was done by bright roll. Example 4 dealt with hot-dip galvanized steel sheets with a coating film made of mainly ç phase.

The line speed of the hot-dip galvanizing line was 100 mpm at the maximum. The solid particles used to create the surface roughness were the stainless steel fine particles having 85 µm of mean particle diameter. The applied blasting machine was a mechanical blasting machine having 330 mm of impeller diameter. The blast to the steel sheet was done at 3900 rpm of rotational speed. The blast density of solid particles was 5 kg/m² of steel sheet, thus manufactured the galvanized steel sheets for automobiles, having 1.2 µm of mean roughness Ra and 0.2 µm or smaller dispersion of roughness in the width direction of steel sheet.

As described above, the present invention provides an apparatus for surface treatment being able to efficiently create a surface roughness even in the treatment of metallic sheet traveling at a high speed, further to an apparatus for surface treatment being able to provide compact design therefor, a method for producing metallic sheet using the apparatus, a hot-dip coating line of metallic sheet using the apparatus, and a continuous annealing line of metallic sheet using the apparatus.

## Claims

1. An apparatus for surface treatment of metallic sheet comprising:
at least one centrifugal blasting machine for blasting solid particles having a mean particle diameter of 30 to 300 µm against a metallic sheet which continuously travels,
said at least one centrifugal blasting machine having a centrifugal rotor having a rotation axis, and being positioned so as the line of intersection between the plane vertical to the rotation axis and the plane of the metallic sheet to become parallel to or 45° or less angle to the direction of travel of the metallic sheet.

2. The apparatus according to claim 1, wherein said at least one blasting machine has a centrifugal rotor having a rotation axis, and is positioned so as the line of intersection between the plane vertical to the rotation axis and the plane of the metallic sheet to become an angle in a range from 5° to 45° to the direction of travel of the metallic sheet.

3. The apparatus according to claim 1, wherein said at least one blasting machine has a centrifugal rotor having a rotation axis, and is positioned so as the line of intersection between the plane vertical to the rotation axis and the plane of the metallic sheet to become parallel to the direction of travel of the metallic sheet.

4. The apparatus according to claim 1, wherein said at least one blasting machine comprises a blasting machine positioned so as the line of intersection between the plane vertical to the rotation axis and the plane of the metallic sheet to become parallel to the direction of travel of the metallic sheet, and a blasting machine positioned so as the line of intersection between the plane vertical to the rotation axis and the plane of the metallic sheet to become an angle in a range from 5° to 45° to the direction of travel of the metallic sheet.

5. The apparatus according to claim 1, wherein said at least one blasting machine comprises a plurality of centrifugal blasting machines arranged in the width direction of the metallic sheet, and at least two centrifugal blasting machines among the plurality of centrifugal blasting machines are positioned so as the line of intersection between the plane vertical to the rotation axis of the centrifugal rotor and the plane of the metallic sheet to become parallel each other.

6. The apparatus according to claim 1, wherein at least one blasting machine comprises a plurality of centrifugal blasting machines arranged in the width direction of the metallic sheet, and at least two centrifugal blasting machines among the plurality of centrifugal blasting machines are driven by the common driving shaft at the respective centrifugal rotors thereof.

7. A method for producing metallic sheet comprising the step of applying surface treatment to a continuously traveling metallic sheet by blasting solid particles having a mean particle diameter of 30 to 300 µm against the metallic sheet using the surface treatment apparatus for metallic sheet according to claim 1.

8. An apparatus for producing metallic sheet comprising:
a hot-dip coating line having a coating bath;
the hot-dip coating line including a cooling device or an alloying furnace after the coating bath; and
the apparatus according to claim 1 being located at downstream side of the cooling device or the alloying furnace.

9. An apparatus for producing metallic sheet comprising:
a continuous annealing line having an annealing furnace; and
the apparatus according to claim 1 being located at downstream side of the annealing furnace.
